# EUROPÄISCHE PATENTSCHRIFT

(11) **EP 1 060 330 B1**
(45) Veröffentlichungstag und Bekanntmachung des Hinweises auf die Patenterteilung: **07.05.2003**
(21) Anmeldenummer: 99907584.9
(22) Anmeldetag: 02.03.1999
(51) Int. Cl.: F02B 23/10

(54) **DIREKTEINSPRITZENDE BRENNKRAFTMASCHINE**
INTERNAL COMBUSTION ENGINE WITH DIRECT FUEL INJECTION
MOTEUR A COMBUSTION INTERNE A INJECTION DIRECTE

(30) Priorität: 04.03.1998 DE 19809066; 13.08.1998 DE 19836707
(43) Veröffentlichungstag der Anmeldung: 20.12.2000
(73) Patentinhaber: AUDI AG, 85045 Ingolstadt (DE)
(72) Erfinder: OTTOWITZ, Alfred, D-85084 Reichertshofen (DE); RIEGER, Thomas, D-85055 Ingolstadt (DE); WERMUTH, Dietmar, D-85080 Gaimersheim (DE); SCHLADT, Thomas, D-85117 Eitensheim (DE); SERIFSOY, Murat, D-85051 Ingolstadt (DE); WURMS, Rainer, D-85101 Lenting (DE); FALTERMEIER, Georg, D-85283 Wolnzach (DE); BUDACK, Ralf, D-85057 Ingolstadt (DE)
(86) Internationale Anmeldenummer: EP9901345
(87) Internationale Veröffentlichungsnummer: WO99045249

(56) Entgegenhaltungen:
- DE-A- 3 903 842
- DE-A- 3 904 760
- DE-A- 19 713 030
- JP-A- 4 094 416
- JP-A- 5 179 961
- US-A- 5 115 774
- US-A- 5 327 864
- US-A- 5 709 190
- FRAIDL: "DIREKTEINSPRITZUNG BEI OTTOMOTOREN: AKTUELLE TRENDS UND ZUKÜNFTIGE STRATEGIEN" MOTORTECHNISCHE ZEITSCHRIFT, Bd. 25, Nr. 2, 1. Februar 1997, Seiten 82-85, XP000678381 STUTTGART

## Beschreibung

Die vorliegende Erfindung betrifft eine direkteinspritzende Brennkraftmaschine, die pro Zylinder wenigstens zwei nebeneinander angeordnete Einlaßventile, eine Anzahl von Auslaßventilen, eine im wesentlichen koaxiale Zündkerze, ein Einspritzventil und einen Kolben aufweist. Ferner betrifft die vorliegende Erfindung ein Verfahren zur Gemischaufbereitung bei einer direkteinspritzenden Brennkraftmaschine.

Eine solche Brennkraftmaschine sowie ein Verfahren ist beispielsweise aus "The Ford PROCO Engine Update" Scussel A. J. et al, SAE 780699 bekannt. Dort wird der Kraftstoff mittels einer Hochdruckeinspritzdüse direkt in einen Zylinder der Brennkraftmaschine eingespritzt. Die für die Aufbereitung eines homogenen mageren Gemisches notwendige Zeit begrenzt jedoch den Einspritzzeitpunkt. Daher finden Dosierung und Aufbereitung des Kraftstoffs gleichzeitig statt. Um jedoch ein örtlich begrenztes Gebiet mit einem brennbaren Kraftstoff-/Luftgemisch zu erhalten, ist es notwendig, den Kraftstoff erst sehr spät einzubringen, was bei der Gemischbildung aber Probleme mit sich bringt.

Vor diesem Hintergrund ist es Aufgabe der vorliegenden Erfindung, eine verbesserte direkteinspritzende Brennkraftmaschine sowie ein Verfahren zur Gemischaufbereitung zu konzipieren, welche sich im homogenen Magerbetrieb und im geschichteten Magerbetrieb durch einen geringen Kraftstoffverbrauch sowie durch geringe Abgasemissionen auszeichnen.

Zur Lösung dieser Aufgabe ist das Einspritzventil zwischen zwei der nebeneinander angeordneten Einlaßventile und dem an diese Einlaßventile angrenzenden Abschnitt der Zylinderwand angeordnet und weist der Kolben eine langgestreckte Brennraummulde auf, wobei sich die Brennraummulde im wesentlichen in Richtung der senkrechten Projektion eines aus dem Einspritzventil austretenden Einspritzstrahles auf die Stirnfläche des Kolbens erstreckt, in Richtung des Einspritzstrahles aufweitet und eine im wesentlichen quer verlaufende Stufe aufweist. Diese Stufe unterteilt die Brennraummulde in einen ersten, dem Einspritzventil fernen Bereich zur Führung der Frischluftströmung und in einen zweiten, dem Einspritzventil nahen Bereich zur Führung des Einspritzstrahles, wobei der erste Bereich der Brennraummulde tiefer ausgebildet ist als der zweite Bereich und zum Rand des Kolbens hin sanft ausläuft. Durch die Unterteilung in zwei Bereiche wird das Gemisch in besonders effektiver Weise innerhalb des Brennraums aufbereitet und eine bessere Verbrennung bei geringen Schadstoffwerten realisiert. Dazu wird die tumbleförmig in den Brennraum einströmende Frischluft, welche durch die von den benachbarten Einlaßventilen beherrschten Einlaßöffnungen eintritt und an der den Einlaßventilen gegenüberliegenden Zylinderwand nach unten in Richtung auf den Kolben zuströmt, und der Kraftstoff, der je nach Betriebszustand der Brennkraftmaschine früher oder später durch das Einspritzventil eingespritzt wird, homogen durchmischt oder aber als geschichtete Ladung aufbereitet, zur Zündkerze bewegt und dort gezündet. Beim homogenen Magerbetrieb bewirkt die langgestreckte Brennraummulde mit der quer verlaufenden Stufe, daß die tumbleförmig eintretende Frischluft den ersten, dem Einspritzventil fernen Bereich der langgestreckten Brennraummulde durchläuft und an der Stufe nach oben hin umgelenkt wird, so daß der eingespritzte Kraftstoff entgegen die Tumbleströmung in die Brennraummulde eingespritzt werden kann. Und beim geschichteten Magerbetrieb wird der durch das Einspritzventil eingespritzte Kraftstoff vor die Tumbleströmung in den vor der Stufe befindlichen zweiten, dem Einspritzventil nahen Bereich der Brennraummulde eingespritzt. Sobald die Kraftstoffteilchen die Stufe erreichen, werden sie mit der entgegenströmenden Luft gut durchmischt, so daß nahe der Stufe eine homogene Gemischwolke entsteht, während der restliche Brennraum einen deutlichen Luftüberschuß aufweist. Durch die weitere Verdichtungsbewegung des Kolbens wird die Gemischwolke dann zur Zündkerze bewegt, wo sie entzündet wird.

Zur Unterstützung der tumbleförmigen Frischluftströmung sollten die Einlaßventile gemäß einer vorteilhaften Weiterbildung der Erfindung einen maximalen Abstand zueinander aufweisen. Dieses Merkmal begünstigt außerdem die Unterbringung des Einspritzventils zwischen den Einlaßventilen.

Das Einspritzventil soll in einem Winkel von ca. 30 bis 80 Grad zur Achse des Zylinders geneigt angeordnet sein, damit die langgestreckte Brennraummulde bis zur Stufe von dem eingespritzten Kraftstoff erreichbar ist. Zudem könnte das Einspritzventil auch einen Bendwinkel aufweisen, welcher den Einspritzstrahl in die gewünschte Richtung ablenkt, so daß die Mittelachse des Einspritzstrahls unter einem Winkel von ca. 45 bis 70 Grad zur Achse des Zylinders angeordnet ist. Durch die Neigung und/oder den Bendwinkel des Einspritzventils kann der Einspritzstrahl so eingestellt werden, daß er für den homogenen Magerbetrieb bei einem ersten Kurbelwellenwinkel in die Tumbleströmung hinein und für den geschichteten Magerbetrieb bei einem zweiten Kurbelwellenwinkelbereich vor die Tumbleströmung gerichtet ist, so daß für beide Betriebsphasen eine optimale Gemischaufbereitung erreicht wird.

Für den homogenen Magerbetrieb spritzt das Einspritzventil während des Ansaugtaktes je nach Drehzahl bei einem Kurbelwellenwinkel von ca. 440 bis 280 Grad, bevor der Kolben den oberen Totpunkt erreicht, Kraftstoff in den Zylinder ein. Denn auf diese Weise wird der Kraftstoff etwa mittig in die im Brennraum vorherrschende Frischluftströmung eingebracht, so daß der Kraftstoff und die Frischluft homogen durchmischt werden können.

Und für den geschichteten Magerbetrieb spritzt das Einspritzventil während des Kompressionstaktes bei einem Kurbelwellenwinkel von ca. 120 bis 30 Grad, bevor der Kolben den oberen Totpunkt erreicht, Kraftstoff in den Zylinder ein. Somit wird der Kraftstoff größtenteils vor die tumbleförmige Frischluftströmung eingespritzt, durch die Frischluftströmung innerhalb des dem Einspritzventil nahen Bereichs der Brennraummulde in einer zündfähigen Ladungswolke stabilisiert und schließlich zur Zündkerze transportiert. Dabei dient die langgestreckte Brennraummulde mit der quer verlaufenden Stufe zur Führung bzw. Bündelung der tumbleförmigen Frischluftströmung sowie zur Stabilisierung der sich ausbildenden zündfähigen Gemischwolke. Dieser Vorgang kann trotz des relativ späten Einspritzzeitpunktes vollständig ablaufen.

Bevorzugt verläuft die Stufe, welche die Brennraummulde in einen ersten, dem Einspritzventil fernen Bereich und in einen zweiten, dem Einspritzventil nahen Bereich unterteilt, etwa unterhalb der Zündkerze. Dadurch ermöglicht der erste Bereich eine gute Führung der tumbleförmigen Frischluftströmung und die zentral angeordnete Stufe eine für die Gemischaufbereitung günstige Umlenkung der Frischluftströmung, während der zweite Bereich eine ausreichende Stabilisierung der Ladungswolke nahe der Zündkerze bewirkt. Der erste Bereich der Brennraummulde ist dabei tiefer ausgebildet als der zweite Bereich. Denn dieses Merkmal erleichtert die Umlenkung der tumbleförmigen Frischluft an der Stufe, welche den Übergang vom tiefen Bereich zum flachen Bereich darstellt. Schließlich können die beiden Bereiche der Brennraummulde zum Rand des Kolbens jeweils sanft auslaufend ausgebildet sein. Damit ist ein besonders leichtes Einströmen der Frischluft in den ersten Bereich und des Kraftstoffs in den zweiten Bereich der Brennraummulde realisiert.

Gemäß einer Weiterbildung der Erfindung weitet sich die langgestreckte Brennraummulde in Richtung des Einspritzstrahls auf. Damit wird erreicht, daß die tumbleförmige Frischluftströmung in der Brennraummulde gebündelt bzw. zusammengeführt wird, was die Durchmischung von Frischluft und Kraftstoff erleichtert. Analog kann der erste Bereich der Brennraummulde eine breite, im wesentlichen parabolische Form aufweisen, während der zweite Bereich eine schmale, schneisenartige Form aufweisen kann. Diese Formen sind in optimaler Weise auf die durch wenigstens zwei Einlaßventile einströmende Frischluft bzw. auf den durch das Einspritzventil eingespritzten Kraftstoff abgestimmt.

Indem an die in der langgestreckten Brennraummulde im wesentlichen quer verlaufende Stufe ein Steg angeformt ist, der sich über die gesamte Länge der Stufe erstreckt, ist bei dieser direkteinspritzenden Brennkraftmaschine eine weitere Optimierung der Gemischaufbereitung realisiert. Die tumbleförmige Frischluftströmung wird während der Verdichtung und Einspritzung in besonders günstiger Weise mittels des Stegs geführt und lange aufrecht erhalten. Und der im wesentlichen geradlinig eingespritzte Kraftstoffstrahl wird mittels des Stegs nach oben hin umgelenkt. Diese beiden Faktoren führen zu einer ganz entscheidend verbesserten Gemischaufbereitung, so daß eine direkteinspritzende Brennkraftmaschine mit einem besonders geringen Kraftstoffverbrauch sowie mit besonders geringen Abgasemissionen geschaffen ist.

Eine weitere Verbesserung wird erreicht, wenn der Steg im Querschnitt etwa sägezahnförmig ausgebildet ist, wobei die Spitze des sägezahnförmigen Stegs im Brennraum zur Seite der Einlaßventile bzw. des Einspritzventils weist. Die tumbleförmige Frischluftströmung wird somit während der Verdichtung und Einspritzung in besonders günstiger Weise über den gekrümmten Rücken des Stegs geführt und dadurch lange aufrecht erhalten. Und der im wesentlichen geradlinig eingespritzte Kraftstoffstrahl wird über die Spitze des Stegs deutlich nach oben hin umgelenkt. Besitzt der gekrümmte Rücken des sägezahnförmigen Stegs, der zur Seite der Auslaßventile weist, einen Radius, der ca. der halben Höhe des Stegs gegenüber dem zweiten Bereich der Brennraummulde entspricht, so ist bei der erfindungsgemäßen Brennkraftmaschine eine besonders gute Abstimmung zwischen der tumbleförmigen Frischluftströmung im ersten Bereich der Brennraummulde und dem im wesentlichen geradlinig in den zweiten Bereich der Brennraummulde eingespritzten und nach oben hin umgelenkten Kraftstoffstrahl realisiert, da die tumbleförmige Frischluftströmung den Transport der oberhalb des ersten Bereiches der Brennraummulde bzw. oberhalb des Stegs sich ausbildenden Kraftstoffwolke zur Zündkerze deutlich unterstützt.

Ist die Stufe mit dem Steg in der senkrechten Projektion auf die Stirnfläche des Kolbens zu der im wesentlichen koaxialen Zündkerze in einem Abstand von ca. 1/9 bis 1/5 des Kolbendurchmessers angeordnet, so kann die Spitze der Zündkerze im oberen Totpunkt des Kolbens hinter dem Rücken des Stegs in den ersten Bereich der Brennraummulde eintauchen.

Vorteilhaft verläuft der Übergang von der Stufe mit dem Steg zu dem ersten Bereich der Brennraummulde unter einem Winkel von ca. 2 bis 30 Grad zur Achse des Zylinders, um an dieser Stelle eine optimale Umlenkung der tumbleförmigen Strömung zu gewährleisten. Und besonders vorteilhaft ist der Verlauf der Stufe mit dem Steg an der dem ersten Bereich der Brennraummulde zugewandten Seite leicht konkav ausgebildet. Denn der konkave Verlauf der Stufe bewirkt während des Verdichtungstaktes eine noch ausgeprägtere Stabilisierung der tumbleförmigen Frischluftströmung innerhalb des ersten Bereiches der Brennraummulde. Der in zweckmäßiger Weise abgerundete oder angefaste Steg kann innerhalb der Kontur des Kolben liegen oder aber über die stirnseitige Kontur des Kolbens hinausragen.

Bevorzugt ist der erste Bereich der Brennraummulde nahe der Stufe mit dem Steg breiter dimensioniert als der Steg. Und besonders bevorzugt ist der der Anzahl von Auslaßventilen nahe erste Bereich der langgestreckten Brennraummulde so ausgebildet, daß die Teller der Auslaßventile im oberen Totpunkt des Kolbens darin eintauchen können. Dadurch ist sichergestellt, daß die Teller der Auslaßventile bei einer Verstellung der Ventilsteuerzeiten nicht auf den Kolben aufsetzen.

Zweckmäßig befindet sich die Austrittsöffnung des Einspritzstrahles in der Projektion auf die Stirnfläche des Kolbens vor dem Steg sowie von der Achse des Zylinders möglichst weit entfernt.

Gelöst wird die Aufgabe der vorliegenden Erfindung ferner durch ein Verfahren zur Gemischaufbereitung bei der direkteinspritzenden Brennkraftmaschine gemäß Anspruch 14.

Bei diesem Verfahren bildet die Frischluft eine tumbleförmige Strömung aus, welche nahe am Rand des Kolbens in den ersten Bereich der Brennraummulde eintritt, durch den sich in Strömungsrichtung verjüngenden ersten Bereich zur Mitte des Kolbens hin beschleunigt wird und an der Stufe der Brennraummulde schließlich in Richtung zur Zündkerze umgelenkt wird.

Darüber hinaus strömt beim geschichteten Magerbetrieb während des Ansaugtaktes Frischluft in den Brennraum ein, die als tumbleförmige Strömung den ersten Bereich der Brennraummulde durchläuft und während des Verdichtungstaktes und der Einspritzung durch den Steg oberhalb des ersten Bereiches der Brennraummulde aufrecht erhalten wird.

In einer Weiterführung des Verfahrens wird beim geschichteten Magerbetrieb während des Verdichtungstaktes zu der Frischluft, die den ersten Bereich der Brennraummulde als tumbleförmige Strömung durchläuft, Kraftstoff aus dem Einspritzventil zunächst geradlinig in Richtung des zweiten Bereiches der Brennraummulde eingespritzt und dann an der Stufe mit dem Steg in Richtung zu der Zündkerze hin umgelenkt, wobei sich oberhalb des zweiten Bereiches der Brennraummulde bzw. oberhalb der Stufe mit dem sägezahnförmigen Steg eine Kraftstoffwolke ausbildet, die unterstützt durch die tumbleförmige Frischluftströmung in Richtung zu der Zündkerze transportiert, und mit Frischluft durchmischt wird.

Schließlich sollte das erfindungsgemäße Verfahren so ausgeführt sein, daß gegen Ende des Verdichtungstaktes an der Zündkerze eine Strömungsgeschwindigkeit von ca. 3 bis 6 Metern pro Sekunde eingehalten wird, damit für die Entflammung der Kraftstoffwolke im Brennraum günstige Bedingungen vorherrschen.

Die vorliegende Erfindung wird unter Bezugnahme auf die nachfolgenden Zeichnungsfiguren näher erläutert. Es zeigen:
- Figur 1: Eine perspektivische Ansicht der Anordnung von vier Gaswechselventilen, Zündkerze, Einspritzventil und Kolben einer direkteinspritzenden Brennkraftmaschine in vereinfachter Darstellung;
- Figur 2: eine Draufsicht des Kolbens aus Figur 1;
- Figur 3: eine entlang der Linie III-III geschnittene Ansicht des Kolbens aus Figur 2;
- Figur 4: eine entlang der Linie IV-IV geschnittene Ansicht des Kolbens aus Figur 2;
- Figur 5: eine Draufsicht eines anderen Kolbens, der für eine direkteinspritzende Brennkraftmaschine mit fünf Gaswechselventilen vorgesehen ist;
- Figur 6: einen Schnitt durch einen Kolben mit einem angeformten Steg;
- Figur 7: eine Draufsicht auf den Kolben aus Figur 6; und
- Figuren 8a bis 8h: jeweils einen Schnitt durch den Brennraum der Brennkraftmaschine bei verschiedenen Kurbelwellenwinkeln zur Veranschaulichung des Verfahrens zur Gemischaufbereitung.

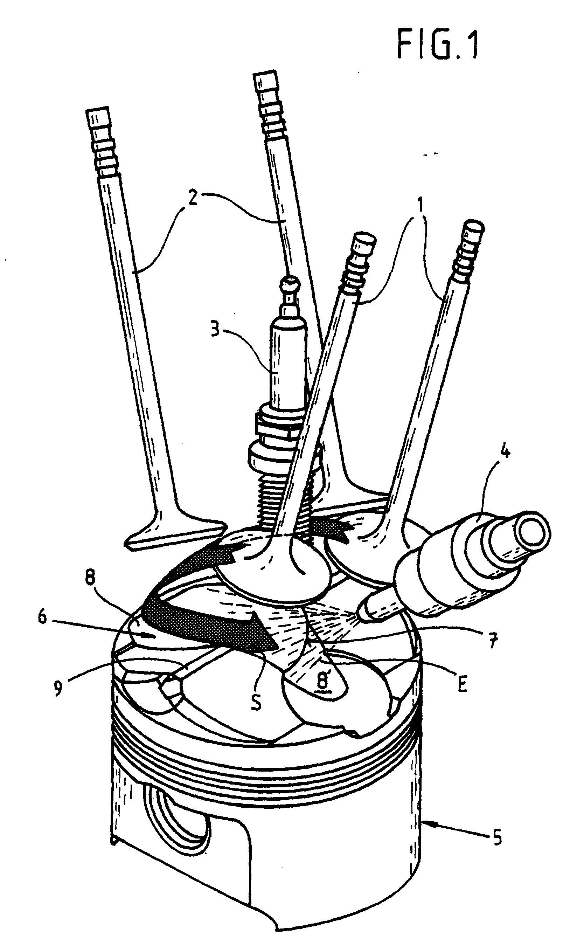

Die erfindungsgemäße Brennkraftmaschine ist gemäß Figur 1 mit zwei nebeneinander angeordneten Einlaßventilen 1 pro Zylinder ausgestaltet. Diese beiden Einlaßventile 1 befinden sich auf einer Halbseite eines nicht näher dargestellten Zylinders und zwei ebenfalls nebeneinander angeordnete Auslaßventile 2 befinden sich auf der anderen Halbseite des Zylinders. Zudem weist die Brennkraftmaschine eine Zündkerze 3 auf, die konzentrisch zu der Achse des Zylinders angeordnet ist. Pro Zylinder ist außerdem ein Einspritzventil 4 vorgesehen, welches zwischen den beiden Einlaßventilen 1 und dem an die beiden Einlaßventile 1 angrenzenden Abschnitt der Zylinderwand angeordnet ist. Der im Zylinder der Brennkraftmaschine angeordnete Kolben 5 weist eine langgestreckte Brennraummulde 6 mit einer quer verlaufenden Stufe 7 auf.

Die durch die beiden Einlaßventile 1 in den Zylinder einströmende Frischluft bildet innerhalb des Brennraums eine Tumbleströmung S aus. Die Ausbildung der Tumbleströmung S wird dabei begünstigt, wenn die beiden Einlaßventile 1 einen maximalen Abstand zueinander aufweisen. Zudem erleichtert dies die Positionierung des Einspritzventils 4.

Die beiden Einlaßventile 1 liegen parallel nebeneinander und sind zu der Zündkerze 3 bzw. zu der Achse des Zylinders jeweils geneigt angeordnet. Die beiden Auslaßventile 2 liegen ebenfalls parallel nebeneinander und sind zu der Achse des Zylinders in anderer Richtung als die Einlaßventile 1 geneigt angeordnet.

Auch das Einspritzventil 4 der Brennkraftmaschine ist zu der Achse des Zylinders geneigt angeordnet, wobei der Neigungswinkel α des Einspritzventils 4 ca. 30 bis 80 Grad beträgt. Damit ist das Einspritzventil 4 zur Achse des Zylinders stärker geneigt als die beiden benachbarten Einlaßventile 1.

Arbeitet die Brennkraftmaschine nun im homogenen Magerbetrieb, so wird durch das Einspritzventil 4 während des Ansaugtaktes bei einem Kurbelwellenwinkel von ca. 440 bis 280 Grad, bevor der Kolben 5 den oberen Totpunkt erreicht, Kraftstoff in die durch die Brennraummulde 6 geführte und an der Stufe 7 umgelenkte Frischluftströmung S eingespritzt. Dadurch ergibt sich eine hohe Relativgeschwindigkeit zwischen Frischluft und Kraftstoff, so daß die Einspritzung einer ausreichenden Menge an Kraftstoff sowie die homogene Durchmischung von Frischluft und Kraftstoff in kürzester Zeit erfolgen kann.

Arbeitet die Brennkraftmaschine dagegen im geschichteten Magerbetrieb, so wird durch das Einspritzventil 4 während des Kompressionstaktes bei einem Kurbelwellenwinkel von ca. 120 bis 30 Grad, bevor der Kolben 5 den oberen Totpunkt erreicht, Kraftstoff vor die an der Stufe 7 umgelenkte tumbleförmige Frischluftströmung S in die Brennraummulde 6 eingespritzt. Die tumbleförmige Frischluftströmung S sorgt nun dafür, daß der eingespritzte Kraftstoff sich innerhalb der Brennraummulde 6 nahe dem Einspritzventil 4 in einer zündfähigen Ladungswolke stabilisiert und durch die weitere Verdichtungsbewegung des Kolbens 5 unter die Zündkerze 3 befördert wird, so daß der zündfähige Anteil der Gemischwolke von einem Zündfunken, der im Zylinder koaxial angeordneten Zündkerze 3, erreichbar ist.

Die langgestreckte Brennraummulde 6 erstreckt sich hierfür im wesentlichen in Richtung der senkrechten Projektion eines aus dem Einspritzventil 4 austretenden Einspritzstrahls E auf die Stirnfläche des Kolbens 5. Die zur langgestreckten Brennraummulde 6 quer verlaufende Stufe 7, die etwa unterhalb der Zündkerze 3 verläuft, unterteilt die Brennraummulde 6 in einen ersten, dem Einspritzventil 4 fernen Bereich 8 und in einen zweiten, dem Einspritzventil 4 nahen Bereich 8'. Dabei ist der erste, dem Einspritzventil 4 fernliegende Bereich 8 tiefer ausgebildet als der zweite, dem Einspritzventil 4 naheliegende Bereich 8'. Zum Rand des Kolbens 5 hin laufen beide Bereiche 8, 8' der langgestreckten Brennraummulde 6 sanft aus. Außerdem ist die langgestreckte Brennraummulde 6 zur Optimierung der Strömungsbedingungen in Richtung des Einspritzstrahls E aufweitend und in Richtung der Frischluftströmung S sich verjüngend ausgeführt. Dies begünstigt sowohl den Einspritzstrahl E als auch die Frischluftströmung S.

Schließlich ist der Kolben 5 dachförmig ausgebildet, wobei die Stufe 7 der Brennraummulde 6 und der Giebel 9 des dachförmigen Kolbens 5 eine annähernd gerade Linie bilden. Diese Form ist auf die zur Achse des Zylinders jeweils geneigt angeordneten Gaswechselventile 1, 2 der Brennkraftmaschine abgestimmt und ermöglicht einen äußerst kompakten Brennraum.

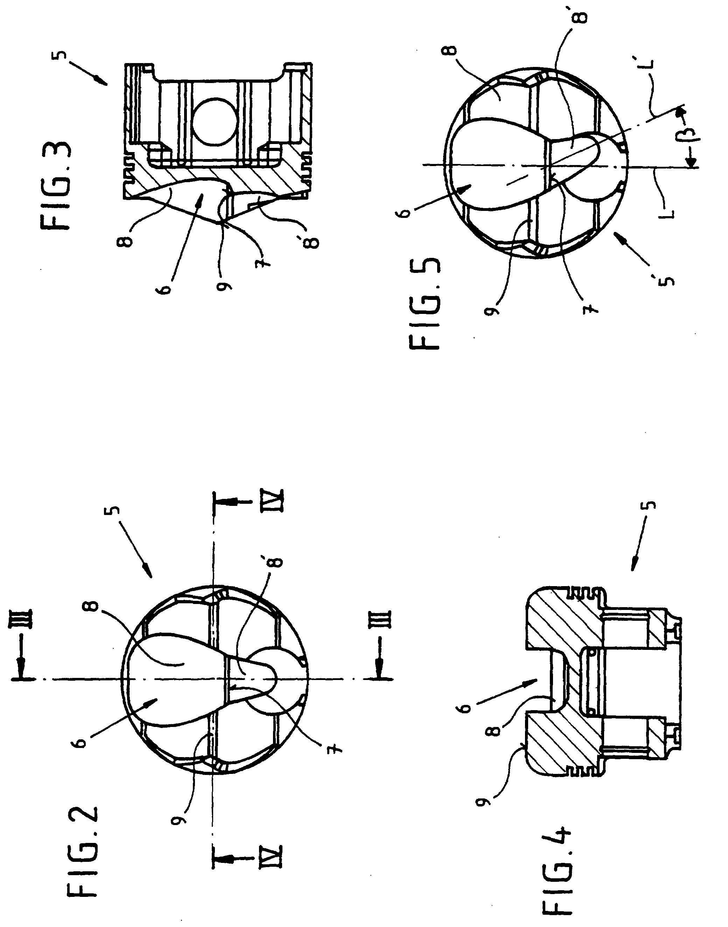

In der Figur 5 ist darüber hinaus eine Draufsicht eines anderen Kolbens 5' gezeigt, welcher für eine direkteinspritzenden Brennkraftmaschine mit fünf Gaswechselventilen, das heißt mit drei Einlaßventilen 1 und zwei Auslaßventilen 2 vorgesehen ist. Dadurch ist das Einspritzventil 4 in unsymmetrischer Weise zwischen einem der seitlichen Einlaßventile 1 und dem benachbarten mittigen Einlaßventil 1 angeordnet, wodurch sich eine schräge Einbaulage ergibt. Auch bei dieser schrägen Einbaulage verläuft die langgestreckte Brennraummulde 6 im wesentlichen in Richtung der senkrechten Projektion eines aus dem Einspritzventil 4 austretenden Einspritzstrahles E auf die Stirnfläche des Kolbens 5'. Dabei schließen die Längsachse L des ersten, symmetrisch angeordneten Bereichs 8 und die Längsachse L' des zweiten, unsymmetrisch angeordneten Bereichs 8' jedoch einen spitzen Winkel β ein. Dies folgt daraus, daß der erste Bereich 8 auf die Frischluftströmung S und der zweite Bereich 8' auf den Einspritzstrahl E abgestimmt ist. Die Stufe 7 zwischen den beiden Bereichen 8, 8' verläuft im wesentlichen quer zur Richtung des Einspritzstrahles E beziehungsweise parallel zu dem Giebel 9 des dachförmigen Kolbens 5'.

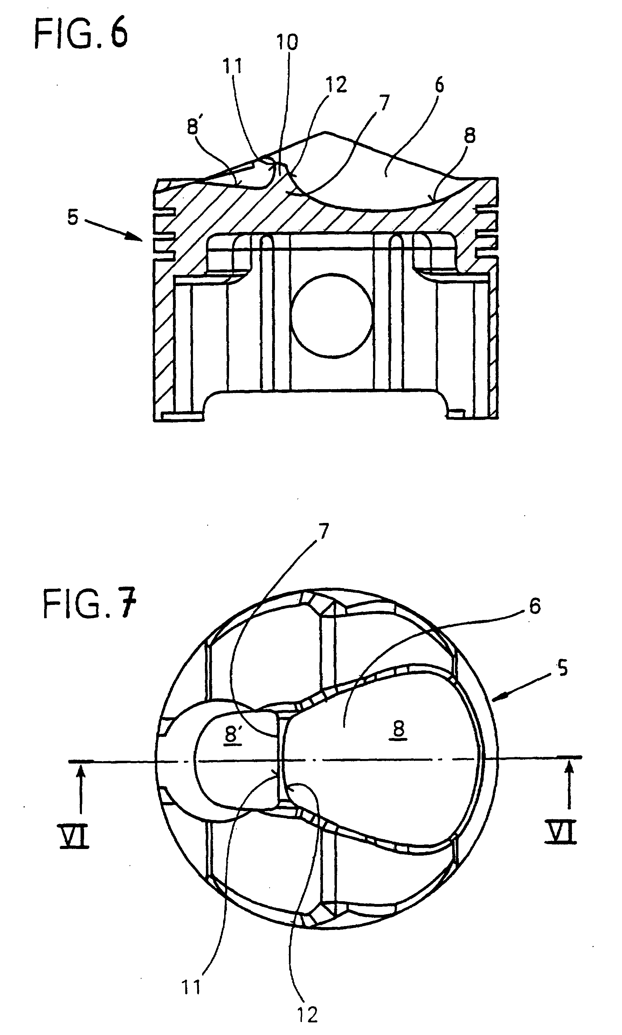

In Figur 6 ist der geschnittene Kolben 5 dargestellt, wobei der Schnitt VI-VI entlang der Längsachse der langgestreckten Brennraummulde 6 geführt ist. Folglich ist die zur langgestreckten Brennraummulde 6 im wesentlichen quer verlaufende Stufe 7, welche die Brennraummulde 6 in den ersten Bereich 8 und den zweiten Bereich 8' unterteilt, senkrecht zu ihrem Verlauf geschnitten. Dadurch läßt sich besonders gut erkennen, daß an die Stufe 7 ein im Querschnitt etwa sägezahnförmiger Steg 10 angeformt ist, wobei die Spitze 11 des sägezahnförmigen Stegs 10 im Brennraum zur Seite der Einlaßventile 1 bzw. des Einspritzventils 4 weist und der Rücken 12 des sägezahnförmigen Stegs 10 im Brennraum zur gegenüberliegenden Seite der Auslaßventile 2 weist.

Der Rücken 12 des sägezahnförmigen Stegs 10 besitzt im gezeigten Ausführungsbeispiel einen Radius R, der ungefähr der halben Höhe des Stegs 10 gegenüber dem zweiten Bereich 8' der Brennraummulde 6 entspricht. Dabei ist der Rücken 12 des Stegs 10 gegenüber der Achse des Zylinders leicht versetzt, so daß der Rücken 12 zu einer koaxial zum Kolben 5 bzw. im Zylinder angeordneten Zündkerze 3 geringfügig beabstandet ist. Zudem ist der Verlauf der Stufe 7 mit dem sägezahnförmigen Steg 10 an der dem ersten Bereich 8 der Brennraummulde 6 zugewandten Seite leicht konkav ausgebildet.

Das Einspritzventil 4 ist im Ausführungsbeispiel um 64 Grad zur Achse des Zylinders geneigt angeordnet. Bei dem gezeigten Einspritzventil 4 tritt der Einspritzstrahl E ohne Bendwinkel aus der Austrittsöffnung aus, wobei die Austrittsöffnung möglichst weit von der Achse des Zylinders entfernt angeordnet ist.

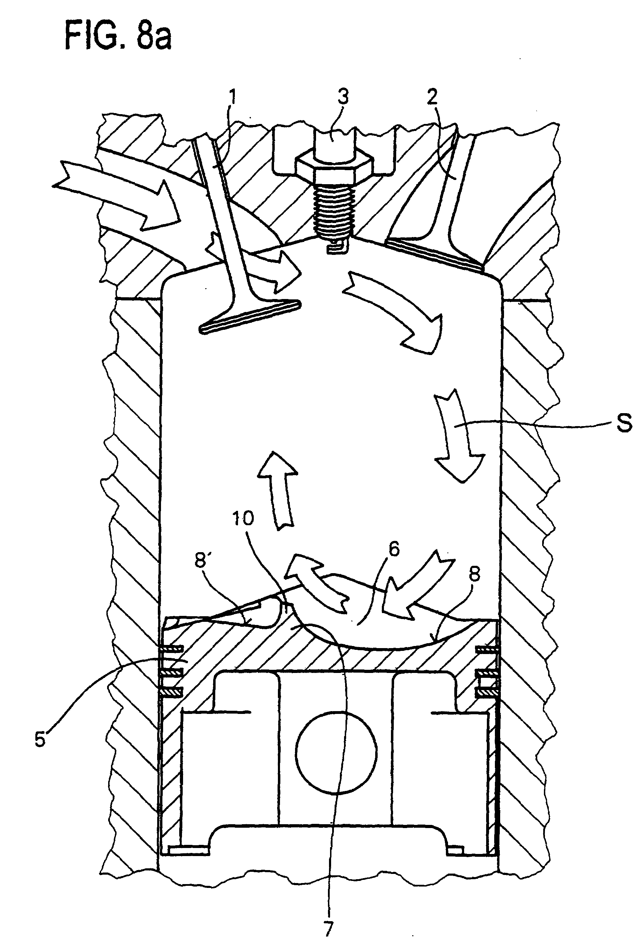

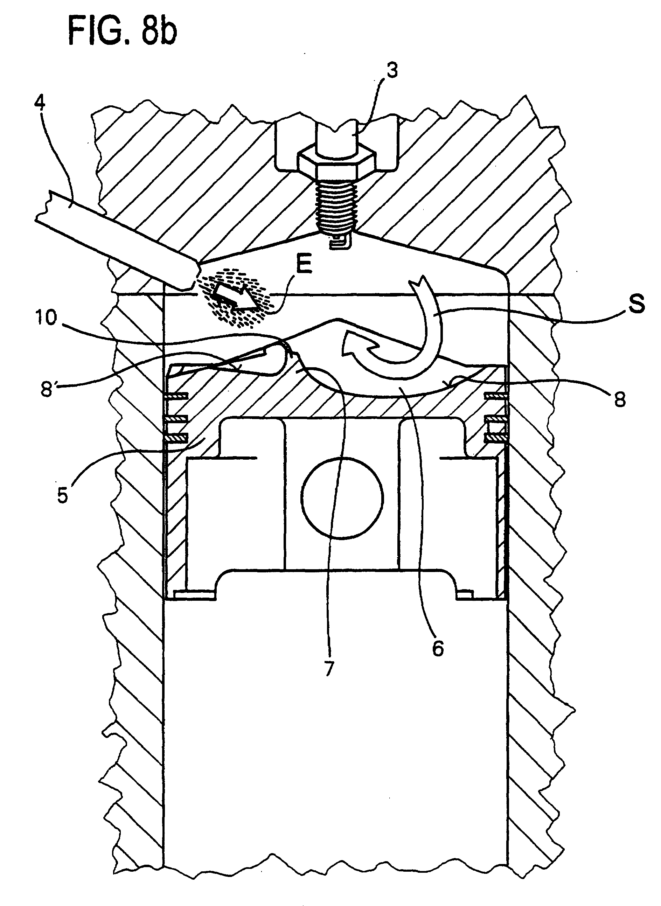

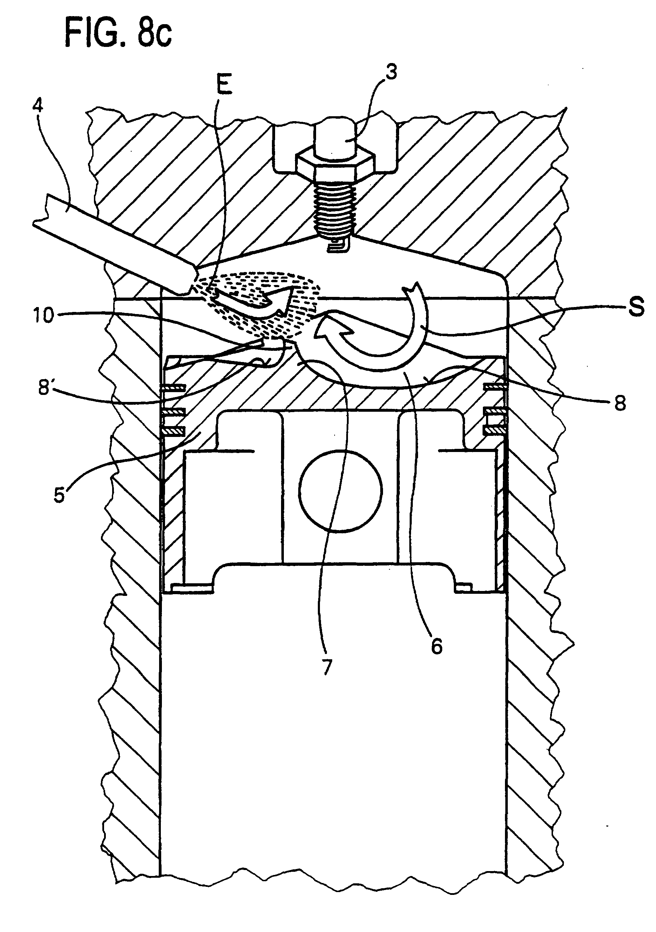

In Figur 8a ist eine vereinfachte Darstellung eines Brennraums der erfindungsgemäßen Brennkraftmaschine gezeigt, wobei dies einer Momentaufnahme bei einem Kurbelwellenwinkel von ca. 180 Grad, das heißt gegen Ende des Ansaugtaktes entspricht. Während des Ansaugtaktes strömt Frischluft durch die von den Einlaßventilen 1 beherrschten Einlaßöffnungen in den Brennraum der Brennkraftmaschine hinein und wird an der Decke des Brennraums sowie an der den Einlaßventilen 1 gegenüberliegenden Zylinderwand vorbei in den ersten Bereich 8 der Brennraummulde 6, der auch als "Frischluftbereich" bezeichnet werden kann, geleitet.

Der im Verlauf des sich anschließenden Verdichtungstaktes nach oben gehende Kolben 5 und die an den ersten Bereich 8 der Brennraummulde 6 angrenzende Stufe 7 mit dem sägezahnförmig ausgebildeten Steg 10 bewirken dabei, daß die während des Ansaugtaktes entstandene Tumbleströmung S auch während des Verdichtungstaktes und der Einspritzung aufrecht erhalten wird.

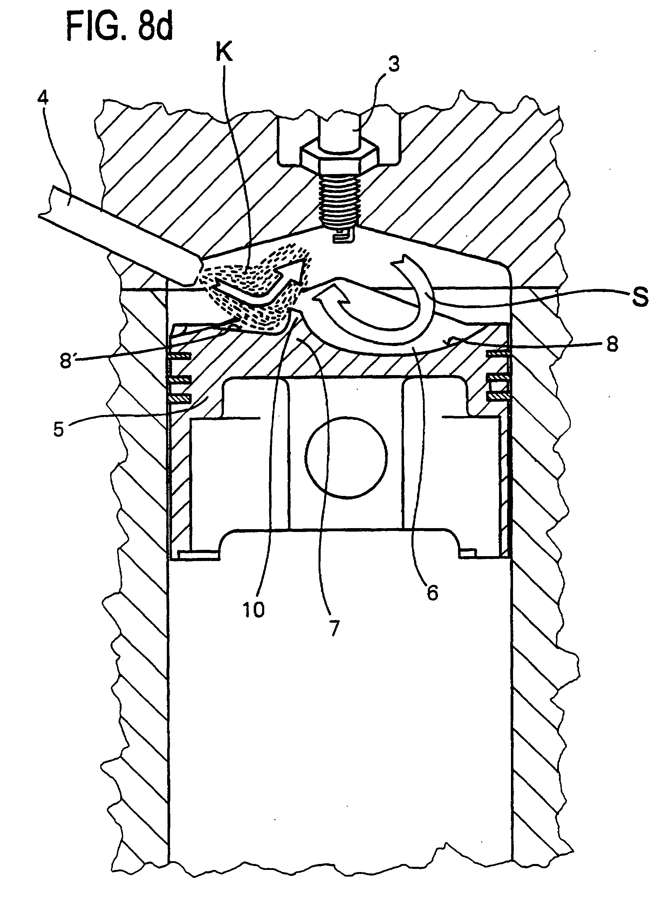

Figur 8b zeigt eine Momentaufnahme bei einem Kurbelwellenwinkel von ca. 50 Grad, das heißt während des Verdichtungstaktes zu Beginn der Einspritzung. Zusätzlich zu der sich tumbleförmig im ersten Bereich 8 der Brennraummulde 6 umwälzenden Frischluftströmung S wird hier aus dem Einspritzventil 4 ein Kraftstoffstrahl E geradlinig in Richtung auf den zweiten Bereich 8' der Brennraummulde 6, der auch als "Kraftstoffbereich" bezeichnet werden kann, eingespritzt, der gemäß Figuren 8c und 8d im weiteren Verlauf und gegen Ende der Einspritzung an der Stufe 7 mit dem Steg 10 nach oben in Richtung auf die Zündkerze 3 hin umgelenkt wird, so daß sich oberhalb des zweiten Bereiches 8' der Brennraummulde 6 bzw. oberhalb des Stegs 10 eine Kraftstoffwolke K ausbildet.

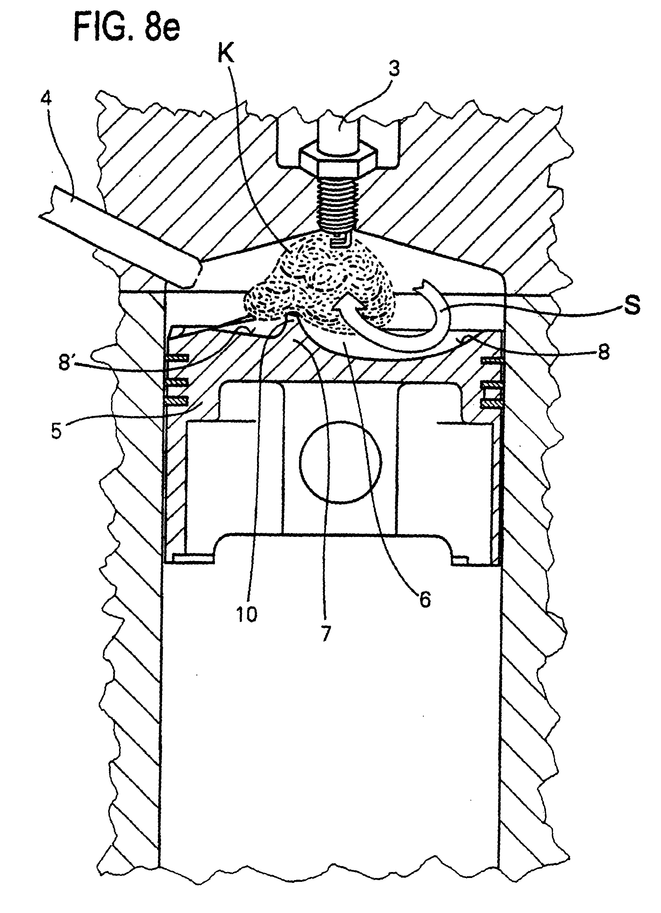

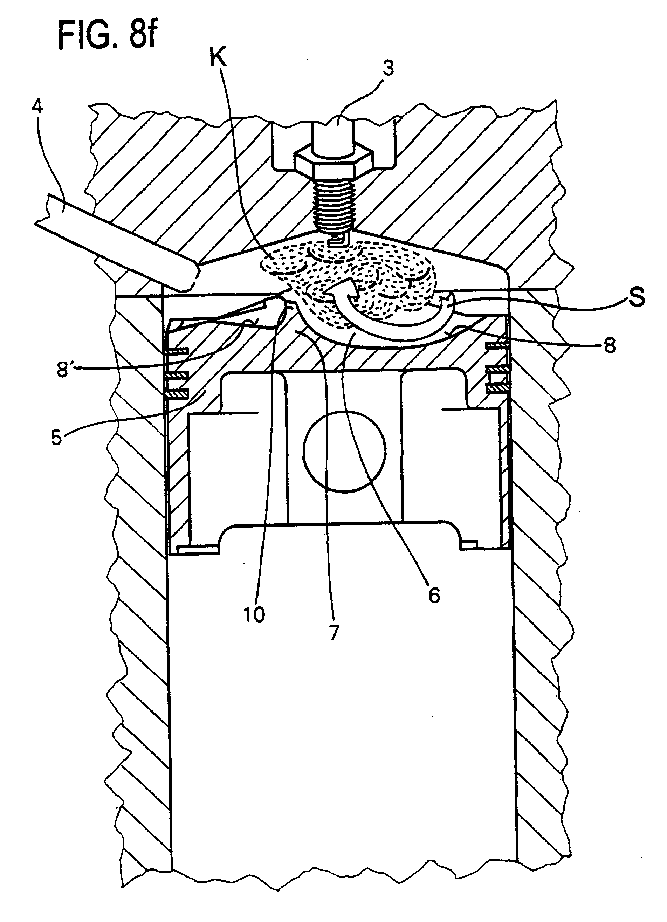

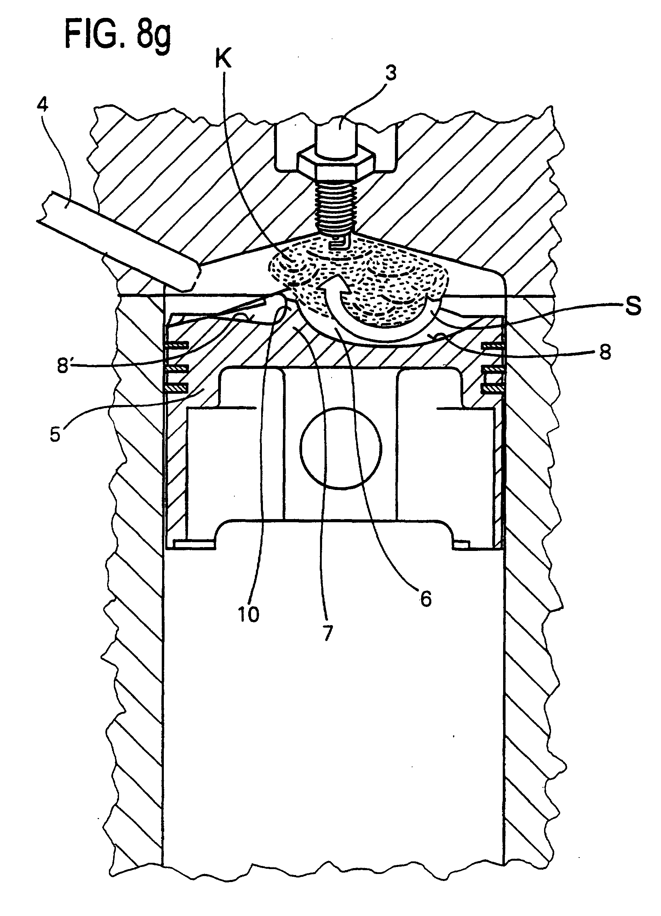

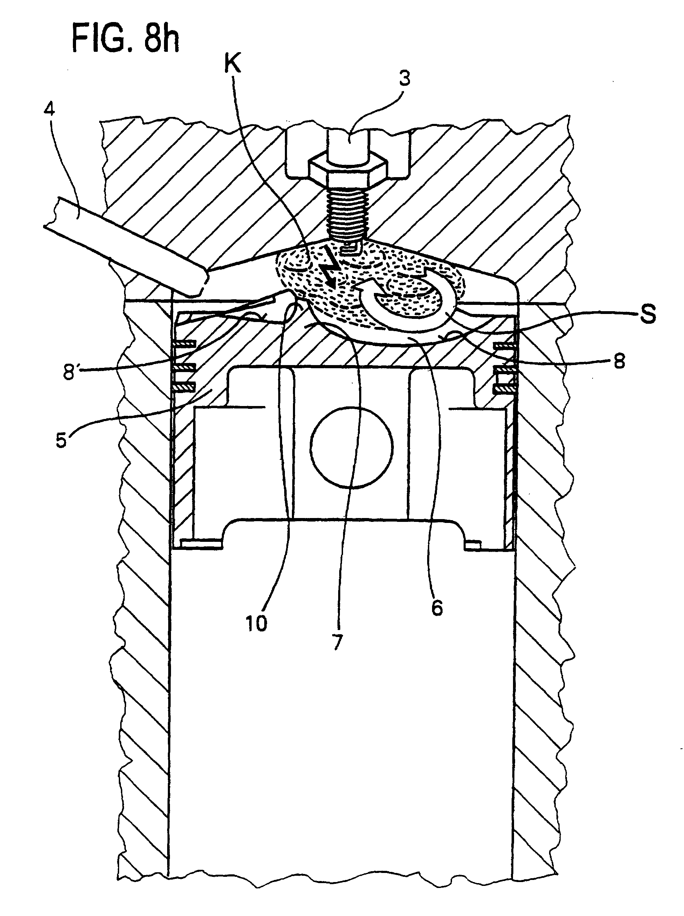

Bei einem Kurbelwellenwinkel von ca. 35 bis 30 Grad, das heißt nach dem Ende der Einspritzung, siehe Figuren 8e und 8f, wird die Kraftstoffwolke K aufgrund des Einspritzimpulses sowie aufgrund der tumbleförmigen Frischluftströmung S in Richtung zur Decke des Brennraums gedrückt und gleichzeitig auch in Richtung zu dem ersten Bereich 8 der Brennraummulde 6, also in Richtung zu der Zündkerze 3 transportiert. Im weiteren Verlauf wird die Kraftstoffwolke K mit der tumbleförmigen Frischluftströmung S weiter durchmischt, siehe Figur 8g, und schließlich entzündet, siehe Figur 8h.

Damit dabei kurz vor der Entzündung unterhalb der Zündkerze 3 optimale Entflammungsbedingungen vorherrschen, sollte zumindest gegen Ende des Verdichtungstaktes eine Strömungsgeschwindigkeit von ca. 3 bis 6 Metern pro Sekunde eingehalten werden.

## Patentansprüche

1. Direkteinspritzende Brennkraftmaschine, die pro Zylinder mindestens zwei nebeneinander angeordnete Einlaßventile, eine Anzahl von Auslaßventilen, eine im wesentlichen koaxiale Zündkerze, ein Einspritzventil und einen Kolben aufweist,
wobei das Einspritzventil (4) zwischen zwei der nebeneinander angeordneten Einlaßventile (1) und dem an diese Einlaßventile (1) angrenzenden Abschnitt der Zylinderwand angeordnet ist, und
wobei der Kolben (5, 5') eine langgestreckte Brennraummulde (6) aufweist, die sich im wesentlichen in Richtung der senkrechten Projektion eines aus dem Einspritzventil (4) austretenden Einspritzstrahles (E) auf die Stirnfläche des Kolbens (5, 5') erstreckt, in Richtung des Einspritzstrahles (E) aufweitet und eine im wesentlichen quer verlaufende Stufe (7) aufweist, welche die Brennraummulde (6) in einen ersten, dem Einspritzventil fernen Bereich (8) und in einen zweiten, dem Einspritzventil (4) nahen Bereich (8') unterteilt, wobei der erste Bereich (8) der Brennraummulde (6) tiefer ausgebildet ist als der zweite Bereich (8') der Brennraummulde (6) und zum Rand des Kolbens (5, 5') hin sanft ausläuft.

2. Brennkraftmaschine nach Anspruch 1, **dadurch gekennzeichnet, daß** die Achsen der parallel nebeneinander angeordneten Einlaßventile (1) einen maximalen Abstand zueinander aufweisen.

3. Brennkraftmaschine nach einem der Ansprüche 1 oder 2, **dadurch gekennzeichnet, daß** das Einspritzventil (4) in einem Winkel (α) von ca. 30 bis 80 Grad zur Achse des Zylinders geneigt angeordnet ist und einen Bendwinkel aufweist, der den Einspritzstrahl (E) ablenkt, so daß die Mittelachse des Einspritzstrahls (E) unter einem Winkel (ε) von ca. 45 bis 70 Grad zur Achse des Zylinders angeordnet ist.

4. Brennkraftmaschine nach einem der Ansprüche 1 bis 3, **dadurch gekennzeichnet, daß** das Einspritzventil (4) während des Auspuff- bzw. Ansaugtaktes bei einem Kurbelwellenwinkel von ca. 440 bis 280 Grad, bevor der Kolben (5, 5') den oberen Totpunkt erreicht, Kraftstoff in den Zylinder einspritzt.

5. Brennkraftmaschine nach einem der Ansprüche 1 bis 3, **dadurch gekennzeichnet, daß** das Einspritzventil (4) während des Kompressionstaktes bei einem Kurbelwellenwinkel von ca. 120 bis 30 Grad, bevor der Kolben (5, 5') den oberen Totpunkt erreicht, Kraftstoff in den Zylinder einspritzt.

6. Brennkraftmaschine nach einem der Ansprüche 1 bis 5, **dadurch gekennzeichnet, daß** auch der zweite Bereich (8') der Brennraummulde (6) zum Rand des Kolbens (5, 5') hin sanft ausläuft.

7. Brennkraftmaschine nach einem der Ansprüche 1 bis 7, **dadurch gekennzeichnet, daß** an die Stufe (7) ein Steg (10) angeformt ist, der sich über die gesamte Länge der Stufe (7) erstreckt.

8. Brennkraftmaschine nach Anspruch 8, **dadurch gekennzeichnet, daß** der Steg (10) im Querschnitt etwa sägezahnförmig ausgebildet ist, wobei die Spitze (11) des sägezahnförmigen Stegs (10) im Brennraum zur Seite der Einlaßventile (1) bzw. des Einspritzventils (4) weist und wobei der gekrümmte Rücken (12) des sägezahnförmigen Stegs (10) zur Seite der Auslaßventile (2) weist und einen Radius (R) besitzt, weicher ca. der halben Höhe des Stegs (10) gegenüber dem zweiten Bereich (8') der Brennraummulde (6) entspricht.

9. Brennkraftmaschine nach Anspruch 1 bis 8, **dadurch gekennzeichnet, daß** die Stufe (7) mit dem Steg (10) etwa unterhalb der Zündkerze (3) verläuft.

10. Brennkraftmaschine nach Anspruch 1 bis 8, **dadurch gekennzeichnet, daß** die Stufe (7) mit dem Steg (10) in der senkrechten Projektion auf die Stirnfläche des Kolbens (5) zu der im wesentlichen koaxialen Zündkerze (3) in einem Abstand von 1/9 bis 1/5 des Kolbendurchmessers (D) angeordnet ist.

11. Brennkraftmaschine nach einem der Ansprüche 1 bis 10, **dadurch gekennzeichnet, daß** der Übergang von der Stufe (7) mit dem Steg (10) zu dem ersten Bereich (8) der Brennraummulde (6) unter einen Winkel (β) von ca. 2 bis 30 Grad zur Achse des Zylinders verläuft und der Verlauf der Stufe (7) mit dem Steg (10) an der dem ersten Bereich (8) der Brennraummulde (6) zugewandten Seite leicht konkav ausgebildet ist.

12. Brennkraftmaschine nach einem der Ansprüche 1 bis 11, **dadurch gekennzeichnet, daß** der erste Bereich (8) der Brennraummulde (6) nahe der Stufe (7) mit dem Steg (10) breiter dimensioniert ist als der Steg (10) und daß die Teller der Auslaßventile (2) in den ersten Bereich (8) der Brennraummulde eintauchen können.

13. Brennkraftmaschine nach einem der Ansprüche 1 bis 12, **dadurch gekennzeichnet, daß** sich die Austrittsöffnung des Einspritzstrahls (E) in der Projektion auf die Stirnfläche des Kolbens (5) vor dem Steg (10) befindet und von der Achse des Zylinders möglichst weit entfernt ist.

14. Verfahren zur Gemischaufbereitung bei einer direkteinspritzenden Brennkraftmaschine gemäß einem der Ansprüche 1 bis 13, **dadurch gekennzeichnet, daß** die eintretende Frischluft eine tumbleförmige Strömung (S) ausbildet, welche nahe am Rand des Kolbens (5, 5') in den ersten Bereich (8) der Brennraummulde (6) eintritt, durch den sich verjüngenden ersten Bereich (8) zur Mitte des Kolbens (5, 5') hin beschleunigt und an der Stufe (7) schließlich in Richtung zur Zündkerze (3) umgelenkt wird.

15. Verfahren nach Anspruch 14, **dadurch gekennzeichnet, daß** beim geschichteten Magerbetrieb während des Ansaugtaktes Frischluft in den Brennraum einströmt, die als tumbleförmige Strömung (S) den ersten Bereich (8) der Brennraummulde (6) durchläuft und während des Verdichtungstaktes und der Einspritzung durch den Steg (10) oberhalb des ersten Bereiches (8) der Brennraummulde (6) aufrecht erhalten wird.

16. Verfahren nach einem der Ansprüche 14 oder 15, **dadurch gekennzeichnet, daß** beim geschichteten Magerbetrieb während des Verdichtungstaktes zu der Frischluft, die den ersten Bereich (8) der Brennraummulde (6) als tumbleförmige Strömung (S) durchläuft, Kraftstoff aus dem Einspritzventil (4) zunächst geradlinig in Richtung des zweiten Bereiches (8') der Brennraummulde (6) eingespritzt und dann an der Stufe (7) mit dem Steg (10) in Richtung zu der Zündkerze (3) hin umgelenkt wird, wobei sich oberhalb des zweiten Bereiches (8') der Brennraummulde (6) bzw. oberhalb der Stufe (7) mit dem sägezahnförmigen Steg (10) eine Kraftstoffwolke (K) ausbildet, die unterstützt durch die tumbleförmige Frischluftströmung (S) in Richtung zu der Zündkerze (3) transportiert und mit Frischluft durchmischt wird.

## Claims

1. Direct-injection internal combustion engine which has, per cylinder, at least two inlet valves arranged next to one another, a number of exhaust valves, a substantially co-axial spark plug and a piston,
wherein the injection valve (4) is arranged between the two inlet valves (1) arranged next to one another and the section of cylinder wall which adjoins said inlet valves (1), and
wherein the piston (5, 5') has an elongated combustion-chamber trough (6) which extends substantially in the direction of the injected jet (E) emerging from the injection valve (4) when the latter is projected vertically onto the end face of the piston (5, 5'), which widens out in the direction of the injected jet (E), and which has a substantially transversely extending step (7) which divides the combustion chamber trough (6) into a first region (8) remote from the injection valve and a second region (8') adjacent the injection valve (4), the first region (8) of the combustion chamber trough (6) being arranged to be deeper than the second region (8') of the combustion chamber trough (6) and running out at a shallow gradient to the edge of the piston (5, 5')

2. Internal combustion engine according to claim 1, **characterised in that** the axes of the inlet valves (1) arranged next to one another are a maximum distance apart.

3. Internal combustion engine according to either of claims 1 and 2, **characterised in that** the injection valve (4) is arranged to be tilted at an angle (α) of approximately 30 to 80 degrees to the axis of the cylinder and has a bend angle which deflects the injected jet (E) such that the central axis of the injected jet (E) is arranged at an angle (ε) of approximately 45 to 70 degrees to the axis of the cylinder.

4. Internal combustion engine according to one of claims 1 to 3, **characterised in that**, during the exhaust or intake stroke, the injection valve (4) injects fuel into the cylinder at a crankshaft angle of approximately 440 to 280 degrees before the piston (5, 5') reaches top dead centre.

5. Internal combustion engine according to one of claims 1 to 3, **characterised in that**, during the compression stroke, the injection valve (4) injects fuel into the cylinder at a crankshaft angle of approximately 120 to 30 degrees before the piston (5, 5') reaches top dead centre.

6. Internal combustion engine according to one of claims 1 to 5, **characterised in that** the second region (8') too of the combustion chamber trough (6) runs out to the edge of the piston (5, 5') at a shallow gradient.

7. Internal combustion engine according to one of claims 1 to 7, **characterised in that** there is formed on the step (7) a land (10)¹ which extends for the entire length of the step (7).

8. Internal combustion engine according to claim 8², **characterised in that** the land (10) is formed to be approximately sawtooth-shaped in cross-section, with the point (11) of the sawtooth-shaped land (10) pointing in the combustion chamber towards the side on which the inlet valves (1) and injection valve (4) are situated, and with the curved rear (12) of the sawtooth-shaped land (10) pointing towards the side on which the exhaust valves are (2) situated and having a radius which is equal to approximately half the height³ of the land (10) from the second region (8') of the combustion chamber trough (6).

9. Internal combustion engine according to claims 1 to 8, **characterised in that** the step (7) having the land (10) extends approximately below the spark plug (3).

10. Internal combustion engine according to claims 1 to 8, **characterised in that**, when projected vertically onto the end face of the piston (5), the step (7) having the land (10) is arranged at a distance of approximately 1/9th to 1/5th of the diameter of the piston from the substantially co-axial spark plug.

11. Internal combustion engine according to one of claims 1 to 10, **characterised in that** the transition from the step (7) having the land (10) to the first region (8) of the combustion chamber trough (6) extends at an angle (β) of approximately 2 to 30 degrees to the axis of the cylinder and the configuration of the step (7) having the land (10) is arranged to be slightly concave on the side adjacent the first region (8) of the combustion chamber trough (6).

12. Internal combustion engine according to one of claims 1 to 11, **characterised in that**, close to the step (7) having the land (1), the first region (8) of the combustion chamber trough (6) is sized to be wider that the land (10) and **in that** the discs of the exhaust valves (2) can penetrate into the first region (8) of the combustion chamber trough.

13. Internal combustion engine according to one of claims 1 to 12, **characterised in that**, when projected onto the end face of the piston (5), the outlet opening for the injected jet (E) is upstream of the land (10) and is as far away as possible from the axis of the cylinder.

14. Method of producing a mixture in a direct-injection internal combustion engine according to one of claims 1 to 13, **characterised in that** the incoming fresh air forms a tumbling flow (S) which enters the first region (8) of the combustion chamber trough (6) close to the edge of the piston (5, 5'), accelerates through the tapering first region (8) to the centre of the piston (5, 5'), and is finally diverted in the direction of the spark plug (3) at the step (7).

15. Method according to claim 14, **characterised in that**, in the layered lean regime during the intake stroke, fresh air flows into the combustion chamber, flows through the first region (8) of the combustion chamber trough (6) as a tumbling flow (S) and during the compression stroke and the injection is maintained above the first region (8) of the combustion chamber trough (6) by the land (10).

16. Method according to either of claims 14 and 15, **characterised in that**, in the layered lean regime during the compression stroke, fuel is first injected from the injection valve (4), into the fresh air which flows through the first region (8) of the combustion chamber trough (6) as a tumbling flow, in a straight line in the direction of the second region (8') of the combustion chamber trough (6) and is then diverted towards the spark plug (3) at the step (7) having the land (10), with a cloud of fuel (K) forming above the second region (8') of the combustion chamber trough (6) or above the step (7) having the saw-tooth-shaped land (10) and, with the assistance of the tumbling flow of fresh air (S), being transported in the direction of the spark plug (3) and being thoroughly mixed with fresh air.

## Revendications

1. Moteur à combustion interne à injection directe, présentant pour chaque cylindre au moins deux soupapes d'admission disposées l'une à côté de l'autre, une pluralité de soupapes d'échappement, une poulie d'allumage sensiblement coaxiale, un injecteur et un piston,
l'injecteur (4) étant disposé entre deux soupapes d'admission (1) disposées l'une à côté de l'autre et le tronçon, limitrophe à ces soupapes d'injection (2), de la paroi de cylindre, et
le piston (5, 5') présentant une cavité de chambre de combustion (6) allongée, piston s'étendant sensiblement dans la direction de la projection perpendiculaire d'un jet d'injection (E) sortant de l'injecteur (4), sur la face frontale du piston (5, 5'), allant en s'élargissant dans la direction du jet d'injection (E), et un étagement (7) s'étendant sensiblement transversalement, qui subdivise la cavité de chambre de combustion (6) en une première zone (8) distante de l'injecteur, et une deuxième zone (8') proche de l'injecteur (4), la première zone (8) de la cavité de chambre de combustion (6) étant plus profonde que la deuxième zone (8') de la cavité de chambre de combustion (6) et allant en évoluant avec des formes souples vers le bord du piston (5, 5').

2. Moteur à combustion interne selon la revendication (1), **caractérisé en ce que** les axes des soupapes d'admission (1) disposées parallèlement les unes à côté des autres présentent un espacement mutuel maximal.

3. Moteur à combustion interne selon l'une des revendications 1 ou 2, **caractérisé en ce que** l'injecteur (4) est incliné sous un angle (α) d'environ 30 à 80° par rapport à l'axe du cylindre et présente un angle de confinement déviant le jet d'injection (E), de sorte que l'axe médian du jet d'injection (E) soit orienté sous un angle (ε) d'environ 40 à 70° par rapport à l'axe du cylindre.

4. Moteur à combustion interne selon l'une des revendications 1 à 3, **caractérisé en ce que** l'injecteur (4) injecte du carburant dans le cylindre, pendant la course d'échappement ou d'aspiration, pour un angle de vilebrequin d'environ 440 à 280°, avant que le piston (5, 5') ait atteint le point mort supérieur.

5. Moteur à combustion interne selon l'une des revendications 1 à 3, **caractérisé en ce que** l'injecteur (4) injecte du carburant dans le cylindre, pendant la course de compression, pour un angle de vilebrequin d'environ 120 à 30° avant que le piston (5, 5') ait atteint le point mort supérieur.

6. Moteur à combustion interne selon l'une des revendications 1 à 5, **caractérisé en ce qu'**également la deuxième zone (8') de la cavité de chambre de combustion (6) évolue avec des formes souples vers le bord du piston (5, 5').

7. Moteur à combustion interne selon l'une des revendications 1 à 7, **caractérisé en ce que** sur l'étagement (7) est formée une nervure (10) s'étendant sur toute la longueur de l'étagement (7).

8. Moteur à combustion interne selon la revendication 7, **caractérisé en ce que** la nervure (10) a une section transversale à peu près en forme de dent de scie, sachant que la pointe (11) de la nervure (10) en forme de dent de scie est tournée, dans la chambre de combustion, dans le côté des soupapes d'admission (1) ou de l'injecteur (4), et le dos (12) incurvée de la nervuré (10) en forme de dent de scie est tourné vers le côté des soupapes d'échappement (2) et présente un rayon (R) qui correspond à peu près la moitié de la hauteur de la nervure (10) par rapport à la deuxième zone (8') de la cavité de chambre de combustion (6).

9. Moteur à combustion interne selon les revendications 1 à 8, **caractérisé en ce que** l'étagement (7) avec la nervure (10) s'étend un peu au-dessous de la bougie d'allumage.

10. Moteur à combustion interne selon les revendications 1 à 8, **caractérisé en ce que** l'étagement (7) avec la nervure (10), en projection perpendiculaire sur la face frontale du piston (5), est disposé, par rapport à la bougie d'allumage (3) qui est sensiblement coaxiale, à une distance de 1/9 à 1/5 du diamètre de piston (D).

11. Moteur à combustion interne selon l'une des revendications 1 à 10, **caractérisé en ce que** la transition entre l'étagement (7) avec la nervure (10), à la première zone (8) de la cavité de chambre de combustion (6), s'étend sous un angle (β) d'environ 2 à 30° par rapport à l'axe du cylindre et l'allure de l'étagement (7) avec la nervure (10), sur la face tournée vers la première zone (8) de la cavité de chambre de combustion (6), est de configuration légèrement concave.

12. Moteur à combustion interne selon l'une des revendications 1 à 11, **caractérisé en ce que** la première zone (8) de la cavité de chambre de combustion (6), à proximité de l'étagement (7) avec la nervure (10), est plus large que la nervure (10), et que les disques de soupape d'échappement (2) peuvent pénétrer dans la première zone (8) de la cavité de chambre de combustion.

13. Moteur à combustion interne selon l'une des revendications 1 à 12, **caractérisé en ce que** l'ouverture de sortie du jet d'injection (E), en projection sur la face frontale du piston (5), se trouve devant la nervure (10) et est éloignée d'une distance maximale par rapport à l'axe du cylindre.

14. Procédé de préparation d'un mélange pour un moteur à combustion interne à injection directe selon l'une des revendications 1 à 13, **caractérisé en ce que** l'air neuf entrant présente un écoulement (7) produisant un renversement, qui, à proximité du bord du piston (5, 5'), pénètre dans la première zone (8) de la cavité de chambre de combustion (6), va en s'accélérant en passant par première zone (8) allant en s'effilant, en progressant vers le centre du piston (5, 5'), et est enfin dévié sur l'étagement (7), pour aller en direction de la bougie d'allumage (3).

15. Procédé selon la revendication 14, **caractérisé en ce que**, dans le cas d'un fonctionnement en régime maigre stratifié, pendant la course d'aspiration, de l'air neuf est injecté dans la chambre de combustion et passe, sous la forme d'écoulement (S) à renversement, dans la première zone (8) de la cavité de chambre de combustion (6) et, pendant la course de compression et l'injection, suite à l'action de la nervure (10), est maintenu verticalement au-dessus de la première zone (8) de la cavité de chambre de combustion (6).

16. Procédé selon l'une des revendications 14 ou 15, **caractérisé en ce qu'**en cas de fonctionnement en régime maigre stratifié, pendant la course de compression de l'air neuf, qui passe dans la première zone (8) de la cavité de chambre de combustion (6) sous la forme d'un écoulement (S) à renversement, du carburant est injecté depuis l'injecteur (4), d'abord en ligne droite en direction de la deuxième zone (8') de la cavité de chambre de combustion (6), puis en effectuant une déviation sur l'étagement (7) avec la nervure (10), dans la direction de la bougie d'allumage (3), sachant que, au-dessus de la deuxième zone (8') de la cavité de chambre de combustion (6), ou au-dessous de l'étagement (7) ayant la nervure (10) en forme de dent de scie, est formé un nuage de carburant (K) qui, soutenu par l'écoulement d'air neuf (S) à renversement, est transporté dans la direction de la bougie d'allumage (3) et est mélangé intimement à l'air neuf.
